# EUROPEAN PATENT SPECIFICATION

(11) **EP 2 487 684 B1**
(45) Date of publication and mention of the grant of the patent: **24.07.2013**
(21) Application number: 11155499.4
(22) Date of filing: 22.02.2011
(51) Int. Cl.: G11B 33/04

(54) **A brochure with a CD pocket**
Broschüre mit einer CD-Hülle
Brochure avec pochette CD

(30) Priority: 14.02.2011 PL 39391511
(43) Date of publication of application: 15.08.2012
(73) Proprietor: Takt Sp. z o.o., 32-329 Boleslaw (PL)
(72) Inventor: Kwiatkowski, Krzysztof, 02-789 Warszawa (PL); Miadzel, Stanislaw, 32-300 Olkusz (PL); Zajac, Adam, 32-332 Bukowno (PL)
(74) Representative: Korga, Leokadia

(56) References cited:
- WO-A1-00/46806
- WO-A1-98/22370
- US-A1- 2001 003 327
- US-A1- 2003 029 749

## Description

The present invention relates to a brochure with a CD pocket particularly for printed materials with CDs, DVDs or BDs attached.

European patent EP 0952582 describes a disc folder in the form of a book. It is CD packaging integrated with a book. The packaging comprises a stack of arranged sheets joined at one edge with a CD pocket for compact discs. The solution is characterized in that said pocket has a central opening on the opposite side of the edge where the disc is inserted and the distance between the open edges is smaller than the diameter of the compact disc. The disc protrudes from the central opening. Additionally, the edges of the pocket are glued on the semicircular edges.

American patent US 6.360.887 describes a CD folder in the form of a booklet which has a multi-page brochure held between two opposing cover panels. The front panel of the cover includes a pocket placed opposite the part containing the brochure. The pocket includes two opposing flaps by which it is attached to the front panel. One of the flaps has a notch that permits it to lie flat on the front panel thus eliminating bulging when the folder is closed. A second pocket may be formed in the cover part. This pocket can accommodate even a thick brochure.

Polish application description no. P-393687 describes a book with a CD pocket, comprising a cover and a stack of inner pages as well as a CD pocket placed on the inner side of the cover. The book according to the invention is characteristic in that the pocket is formed from a single template in the shape of three adjacent quadrilaterals whose height is equal to at least the diameter of the disc and which, after folding along the parallel edges, forms a pocket with a back panel, a front panel and a side panel joining the pocket with the book, wherein there are two side wings formed at the front panel, bent inwards and glued to the back panel at the edges perpendicular to the spine of the book and the pocket is cut together with the stack of inner pages of the book and, after cutting, is open at the edges parallel to the spine of the book.

Further pertinent prior art is described in US 2001/003327 A1, WO 98/22370 A1, US 2003/029749 A1 and in WO 00/46806 A1, which serves as basis for the preamble of claim 1.

The aim of the invention is to design a brochure with a CD pocket, wherein the disc cover is made from a single template, with a formed pocket, open at the outer edge parallel to the spine of the brochure, wherein the depth of the pocket is no smaller than the diameter of the CD, and the maximum height of the brochure does not exceed 125 mm.

The brochure with a CD pocket comprising a cover, a stack of inner pages and a pocket for a CD disc according to the invention is characteristic in that the the cover is formed from a single template in the shape of two quadrilaterals joined by the spine, the height of the said quadrilaterals being equal to at least twice the diameter of the disc, and which after folding along the parallel folding lines form the cover, which has a pocket, formed in at least one of its panels, the said pocket being closed by gluing the outermost page of the stack of inner pages to the cover and open at the outer edge parallel to the spine of the brochure. Favorably, the parallel folding lines of the quadrilaterals forming the cover are scored.

Favorably, there are pockets formed on both panels of the cover.

Favorably, the additional pocket formed from an additional template is glued in between the inner pages of the brochure.

Favorably, the pages of the brochure are glued into the spine of the brochure. Favorably, the maximum height of the brochure is 125mm.

Favorably, the pocket has a window.

Favorably, the pages are joined by any known method.

Favorably, the cover is made of cardboard of basis weight ranging from 200 g/m2 to 400 g/m2.

The main advantage of the solution according to the invention is forming the pocket in the cover which is made from a single template folded along the parallel scoring lines of two quadrilaterals. This feature is extremely important in the production process as it makes it possible to produce a cover with a pocket from a single template, with no side wings, while eliminating the process of gluing the cardboard at the same time.

There are no incisions on any edges perpendicular to the spine of the brochure. Extracting the CD disc is in the direction of opening the brochure.

The cover has only two parallel scoring lines. The format of the cardboard template for the cover is economical, does not require any additional glue flaps to form the pocket. The shape of the template is simple which makes it possible to make full use of the area of the cardboard.

The height of the brochure, which is 125 mm, is of paramount importance as it is equal to the height of typical, used up till now CD cases made of plastic. This feature ensures full exchangeability with CD cases made of plastic.

There may be any number of pages in the brochure, depending on the space needed to print the required text in the brochure. The pages may be joined by any known method e.g: by means of sewing, gluing or stapling with steel staplers. The inner pages may be joined by whole pages by gluing in the cover. The outer surface of the spine of the brochure is made without any visible joints such as threads or staplers.

The CD pockets may be additionally placed between the joined pages of the brochure.

The brochure may have covers made of cardboard of chosen basis weight ranging from 200 g/m2 to 400 g/m2, depending on the purpose of the brochure. The window makes it easier to extract the CD disc and to identify its content. Brochures with a CD or DVD pocket made according to the invention can be manufactured on typical bookbinding machines.

The subject of the invention in one embodiment is presented in the drawing in which:

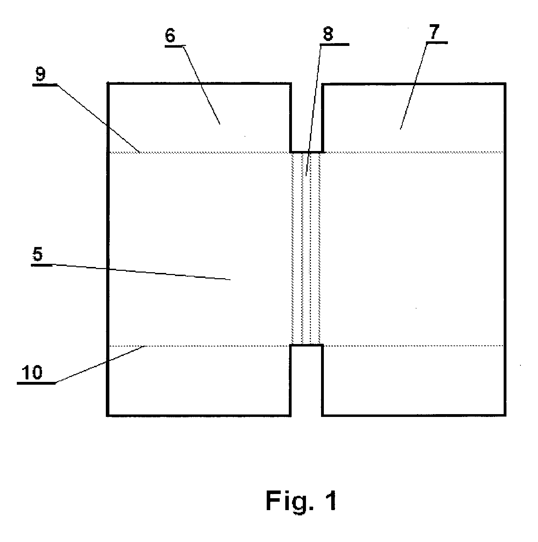

fig. 1 - presents the view of the template;

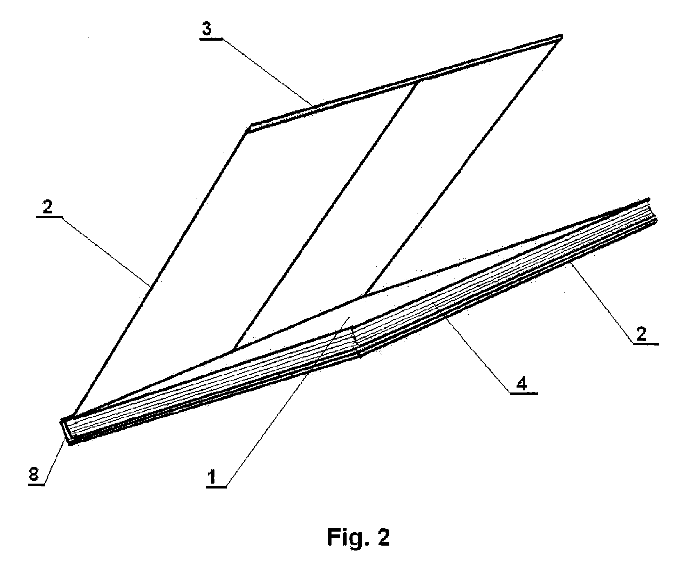

fig. 2- presents the view of the brochure

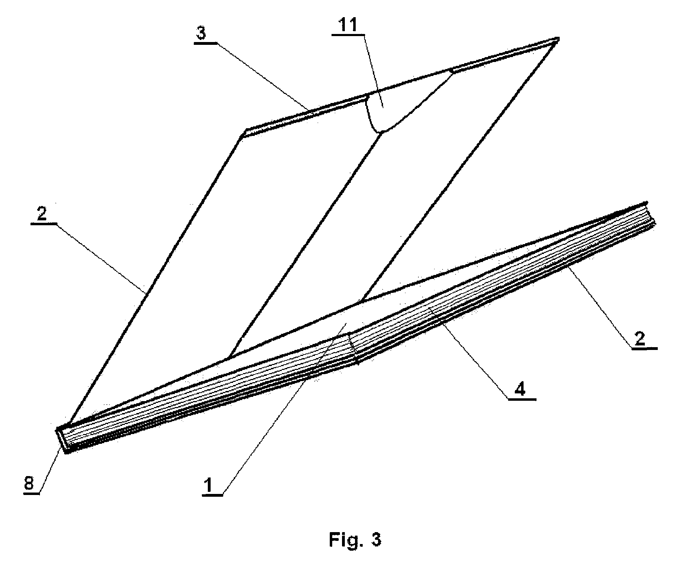

fig. 3 - presents the view of the brochure with a window.

### Embodiment I.

A brochure 1 with a CD pocket 3 comprising a cover 2, a stack of inner pages 4 and a CD pocket 3. The cover 2 is formed from a single template 5 in the shape of two quadrilaterals 6 and 7, whose height is equal to twice the diameter of the disc plus an allowance for the thickness of the cardboard. Out of the template 5 after folding the quadrilaterals 6 and 7 along the scored parallel folding lines 9 and 10 the cover 2 is formed, which has a pocket 3 formed in one of its panels. The pocket 3 is open at the outer edge parallel to the spine 8 of the brochure 1. Closing the panels of the pocket 3 takes place while the cover 2 is being joined with the stack of inner pages 4. The stack of pages 4 of the brochure 1 is glued into the spine 8 of the brochure 1. The cover 2 is made of cardboard of basis weight of 400 g/m2. The height of the brochure 1 is 125 mm.

### Embodiment 2

A brochure 1 with a CD pocket 3 comprising a cover 2, a stack of inner pages 4 and two DVD pockets 3. The cover 2 is formed from a single template 5 in the shape of two quadrilaterals 6 and 7, whose height is equal to twice the diameter of the disc plus an allowance for the thickness of the cardboard. Out of the template 5 after folding the quadrilaterals 6 and 7 along the parallel folding lines 9 and 10 a cover 2 is formed with a CD pocket 3 formed in both its panels. The pockets 3 are open at the outer edge parallel to the spine 8 of the brochure 1. Closing the panels of the pocket 3 takes place while the cover 2 is being joined with the stack of inner pages 4. The stack of pages 4 of the brochure 1 is sewn into the spine 8 of the brochure 1. In the pocket 3 there is a window 11. The cover 2 is made of cardboard of basis weight of 250 g/m2. The height of the brochure 1 is 125 mm.

### Embodiment 3

In a variation of the invention, the brochure 1 has an additional pocket 3 glued in between the sewn in pages 4 of the brochure 1. The cover is made of cardboard of basis weight of 200 g/m2.

## Claims

1. A brochure with a CD pocket comprising a cover with two panels, and a CD pocket, wherein the cover (2) is formed from a single template (5) in the shape of two quadrilaterals (6) and (7) joined by the spine (8), the height of the said quadrilaterals being equal to at least twice the diameter of the disc, and which after folding along the parallel folding lines (9) and (10) form the cover (2), which has a pocket (3) in at least one of its panels, **characterised by** the brochure further comprising a stack of inner pages, and the said pocket being formed by gluing the outermost page (12) of the stack of inner pages (4) to portions of said quadrilaterals which are folded over along folding lines (9) and (10), and the said pocket being open at the outer edge parallel to the spine (8) of the brochure (1).

2. A brochure according to claim (1), wherein the parallel folding lines (9) and (10) of the quadrilaterals (6) and (7) of the cover (2) are scored.

3. A brochure according to claim 1, wherein there are pockets (3) formed in both panels of the cover (2).

4. A brochure according to claims 1 to 3 wherein the additional pocket (3) formed from an additional template (5) is glued in between the inner pages (4) of the brochure (1).

5. A brochure according to claims 1 to 4, wherein the pages (4) of the brochure (1) are glued in the spine (8) of the brochure (1).

6. A brochure according to claims 1 to 5, wherein the maximum height of the brochure (1) is 125 mm.

7. A brochure according to claims 1 to 6, wherein the pocket (3) has a window (11).

8. A brochure according to claim 5, wherein the pages (4) are joined by any known method.

9. A brochure according to claim 1, wherein the cover (2) is made of cardboard of basis weight ranging from 200 g/m² to 400 g/m2.

## Patentansprüche

1. Broschüre mit einer Tasche für CD-Platten, die aus einem Umschlag mit zwei Wänden und einer Tasche für eine CD-Platte besteht, die sich dadurch auszeichnet, dass der Umschlag (2) aus einem Ausschnitt (5) geformt ist, der die Gestalt von zwei Tetragonen (6) und (7) mit der Höhe von mindestens zwei Durchmessern der Platte hat, die mit einem Rücken (8) verbunden sind, aus denen nach der Zusammenlegung den parallelen Kanten (9) und (10) entlang der Umschlag (2) gestaltet ist, der in mindestens einer Wand die Tasche (3) hat, die sich dadurch auszeichnet, dass die Broschüre zusätzlich Innenblätter enthält und dass die Tasche durch das Aufkleben des externen Blattes (12) der Innenblätter (4) an die Teile der vorgenannten Tetragone gebildet ist, die den Kanten (9) und (10) entlang zusammengelegt sind, und dass die Tasche an der äußeren Kante dem Rücken (8) der Broschüre (1) entlang offen ist.

2. Broschüre nach Vorbehalt 1, die sich dadurch auszeichnet, dass die parallelen Kanten (9) und (10) der Tetragone (6) und (7) des Umschlags (2) gebogen sind.

3. Broschüre nach Vorbehalt 1, die sich dadurch auszeichnet, dass in beiden Wänden des Umschlags (2) Taschen (3) gebildet sind.

4. Broschüre nach Vorbehalt 1 bis 4, die sich dadurch auszeichnet, dass eine zusätzliche aus einem zusätzlichen Ausschnitt (5) geformte Tasche (3) zwischen die Innenblätter (4) der Broschüre (1) eingeklebt ist.

5. Broschüre nach Vorbehalt 1 bis 4, die sich dadurch auszeichnet, dass die Innenblätter (4) der Broschüre (1) in den Rücken (8) der Broschüre (1) eingeklebt sind.

6. Broschüre nach Vorbehalt 1 bis 5, die sich dadurch auszeichnet, dass die maximale Höhe der Broschüre (1) 125 mm beträgt.

7. Broschüre nach Vorbehalt 1 bis 4, die sich dadurch auszeichnet, dass die Tasche (3) ein Fenster (11) hat.

8. Broschüre nach Vorbehalt 5, die sich dadurch auszeichnet, dass die Blätter (4) auf beliebige bekannte Art und Weise verbunden sind.

9. Broschüre nach Vorbehalt 1, die sich dadurch auszeichnet, dass der Umschlag (2) aus Karton mit der Grammatur ab 200 g/m² bis 400 g/m² gefertigt ist.

## Revendications

1. Une brochure avec une pochette CD comprenant une couverture avec deux panneaux, et une pochette CD, dans laquelle la couverture (2) est formée à partir d'un seul gabarit (5) sous la forme de deux quadrilatères (6) et (7) reliés par le dos (8), la hauteur desdits quadrilatères étant égale à au moins deux fois le diamètre du disque, et lesquels, après pliage le long des lignes de pliage parallèles (9) et (10) forment la couverture (2), qui présente une pochette (3) dans au moins l'un de ses panneaux, **caractérisée par le fait que** la brochure comprend en outre un empilement de pages intérieures, et ladite pochette est formée par le collage de la plus externe page (12) de l'empilement de pages intérieures (4) aux parties desdits quadrilatères qui sont repliés le long de lignes de pliage (9) et (10), et ladite pochette étant ouverte au niveau du bord extérieur parallèle au dos (8) de la brochure (1).

2. Une brochure selon la revendication (1), dans laquelle les lignes de pliage parallèles (9) et (10) des quadrilatères (6) et (7) de la couverture (2) sont marquées.

3. Une brochure selon la revendication 1, dans laquelle il y a des pochettes (3) formées dans les deux panneaux de la couverture (2).

4. Une brochure selon les revendications 1 à 3, dans laquelle la pochette supplémentaire (3) formée à partir d'un gabarit supplémentaire (5) est collée entre les pages intérieures (4) de la brochure (1).

5. Une brochure selon les revendications 1 à 4, dans laquelle les pages (4) de la brochure (1) sont collées au dos (8) de la brochure (1).

6. Une brochure selon les revendications 1 à 5, dans laquelle la hauteur maximale de la brochure (1) est 125 mm.

7. Une brochure selon les revendications 1 à 5, dans laquelle la pochette (3) présente une fenêtre (11).

8. Une brochure selon la revendication 5, dans laquelle les pages (4) sont reliées par toute méthode connue.

9. Une brochure selon la revendication 1, dans laquelle la couverture (2) est réalisée en carton de grammage compris entre 200 g/m2 et 400 g/m2.
